# EUROPÄISCHE PATENTSCHRIFT

(11) **EP 3 488 561 B1**
(45) Veröffentlichungstag und Bekanntmachung des Hinweises auf die Patenterteilung: **29.03.2023**
(21) Anmeldenummer: 17739959.9
(22) Anmeldetag: 11.07.2017
(51) Int. Cl.: H04L 12/28, D06F 39/00

(54) **HAUSHALTSGERÄT MIT VERBESSERTER STEUERUNG UND VERFAHREN ZUM BETRIEB EINES SOLCHEN HAUSHALTSGERÄTS**
HOUSEHOLD APPLIANCE WITH IMPROVED CONTROL SYSTEM AND METHOD FOR OPERATING SUCH A HOUSEHOLD APPLIANCE
ÉQUIPEMENT MÉNAGER PRÉSENTANT UNE COMMANDE AMÉLIORÉE ET PROCÉDÉ PERMETTANT DE FAIRE FONCTIONNER UN TEL ÉQUIPEMENT MÉNAGER

(30) Priorität: 20.07.2016 DE 102016213232
(43) Veröffentlichungstag der Anmeldung: 29.05.2019
(73) Patentinhaber: BSH Hausgeräte GmbH, 81739 München (DE)
(72) Erfinder: BADEJA, Michael, 70442 Stuttgart-Feuerbach (DE); KOOP, Paul, 70442 Stuttgart-Feuerbach (DE); KRAUS, Viktor, 70442 Stuttgart-Feuerbach (DE)
(86) Internationale Anmeldenummer: PCT/EP2017/067405
(87) Internationale Veröffentlichungsnummer: WO 2018/015214

(56) Entgegenhaltungen:
- EP-A1- 2 319 971
- WO-A1-2010/007054
- WO-A2-2004/022836
- DE-A1-102005 055 411
- DE-A1-102007 014 425
- DE-A1-102012 112 199
- DE-A1-102012 217 975
- DE-A1-102013 210 126
- US-A1- 2013 192 580

## Beschreibung

Die Erfindung betrifft ein Haushaltsgerät mit einer Steuereinrichtung und mindestens einem Sensorknoten, umfassend mindestens einen Sensor, mindestens eine Auswerteeinheit, eine autarke Energieversorgung und eine Schnittstelle zur drahtlosen Datenkommunikation, wobei die Steuereinrichtung und der Sensorknoten eingerichtet sind, drahtlos miteinander zu kommunizieren.

Die Entwicklung von Haushaltsgeräten ist darauf gerichtet, den Betrieb für einen Benutzer sicherer und einfacher zu gestalten, sowie darin durchgeführte Programme hinsichtlich Performance, Zeit, Energieverbrauch und Umweltverträglichkeit stetig zu verbessern. Die Möglichkeit, betriebsrelevante Parameter jederzeit bestimmen zu können, ist hierzu unerlässlich.

Im Allgemeinen werden in Haushaltsgeräten hierzu Sensoren eingesetzt. Solche Sensoren können zum Beispiel resistiv oder kapazitiv arbeitende Sensoren sein, welche über eine Widerstandsmessung etwa die Bestimmung einer Restfeuchte in Wäschestücken erlauben. Auch der Einsatz von Drucksensoren, Temperatur- oder Beschleunigungssensoren ist bereits bekannt, um beispielsweise eine Temperatur während eines Trocknungsprozesse in einem Waschtrockner zu verfolgen oder auch um eine Beladungsmenge zu bestimmen. Nachteilig ist, dass Sensoren meist an unterschiedlichen Stellen im Haushaltsgerät platziert sind, so dass eine hohe Ungenauigkeit der Messsignale daraus resultieren kann, dass die Sensoren unterschiedliche Messstellen erfassen. Sensorknoten beanspruchen meist viel Bauraum, so dass die Anordnung auch hier nicht flexibel gestaltet werden kann und meist ein großer Abstand zwischen dem eigentlichen Messobjekt und dem Sensorknoten entsteht und das Messsignal dann entsprechend ungenau ist. Es wäre daher wünschenswert, wenn eine Sensoranordnung auf möglichst kleinem Bauraum realisiert werden könnte. Außerdem arbeiten Sensorknoten in der Regel nicht selbständig, sondern bedürfen der Steuerung durch eine Steuereinrichtung, so dass Messsignale unabhängig von einer Vorgabe durch eine Steuereinrichtung nicht erfasst werden. Dies wäre aber vor allem für einen sicheren Betrieb eines Haushaltsgeräts wünschenswert.

Haushaltsgeräte mit Sensoranordnungen sind bereits bekannt.

Die Veröffentlichung DE 10 2012 217 975 A1 beschreibt ein Haushaltsgerät mit einer Steuereinrichtung zum Steuern von Betriebsprozessen des Haushaltsgeräts, und mit einer batterielosen elektronischen Sensoreinheit zum Erfassen zumindest eines Betriebsparameters des Haushaltsgeräts, wobei die Sensoreinheit einen Generator zum Bereitstellen elektrischer Energie für die Sensoreinheit aus nicht-elektrischer Energie sowie einen Sender aufweist, der zum drahtlosen Übertragen eines zumindest einen Betriebsparameter charakterisierenden Funksignals an die Steuereinrichtung ausgebildet ist. Der Generator ist ein thermoelektrischer Generator mit zwei thermischen Kontaktflächen, der zum Bereitstellen der elektrischen Energie aufgrund einer Temperaturdifferenz zwischen den Kontaktflächen ausgebildet ist.

Die Veröffentlichung EP 1 895 043 A1 beschreibt eine Waschmaschine und/oder einen Wäschetrockner, insbesondere für den Haushaltsgebrauch, ausgestattet mit einer rotierenden Trommel zur Aufnahme von zu waschenden und/oder zu trocknenden Wäschestücken, und mit Kontrollmitteln, welche mindestens einen funktionalen Parameter der Maschine messen können, wie die Feuchte der Wäschestücke. Die besagten Messmittel sind mit der Kontrolltafel verbunden, um diese entsprechend der erkannten Messgröße zu betreiben. Die Messmittel umfassen dabei einen Generator für elektrische Energie, welcher direkt mit der rotierenden Trommel assoziiert ist und mit der Kontrolltafel der Maschine drahtlos kommuniziert. Der Generator für elektrische Energie umfasst einen Permanentmagneten, welcher frei in einem Rohr aus nicht-leitendem Material gleitet, wobei auf dessen äußerer Oberfläche wenigstens eine Spule gewunden ist, welche mit einer elektrischen Schalttafel verbunden ist, welche in der Lage ist, ein Spannungssignal zu elaborieren und an die Kontrolltafel der Maschine zu senden.

Die Veröffentlichung EP 1 997 951 A1 beschreibt eine Waschmaschine, umfassend eine rotierende Wäschetrommel mit einer frontalen Zugangsöffnung. Die Waschmaschine umfasst weiterhin ein elektrisches Gerät, angepasst an die Trommel und einen elektrischen Generator, welcher in die Trommel eingebaut ist und die Rotation der Trommel nutzt, um die zum Betreiben des elektrischen Gerätes notwendige elektrische Energie zu erzeugen.

Die Veröffentlichung WO 2004/022836 A2 beschreibt einen Wäschetrockner mit einer sich drehenden Trommel zur Aufnahme von zu trocknender Wäsche, wobei die Trommel eine Sensoreinrichtung aufweist zur Bestimmung eines physikalischen Werts im Inneren der Trommel, und wobei die Sensoreinrichtung signalübertragend mit einer Steuerung des Wäschetrockners verbunden ist. Dabei ist die signalübertragende Verbindung draht- und berührungslos ausgebildet.

Die Veröffentlichung US 2013/192580 A1 beschreibt ein diagnostisches System für eine Ofenkammer, innerhalb deren ein Objekt bewegt und erhitzt wird, wobei das diagnostische System umfasst: einen Temperatursensor, der mit dem Objekt innerhalb der Ofenkammer bewegbar ist, wobei der Temperatursensor positioniert ist, um eine Temperatur des Objektes an einem ersten Ort des Objektes zu bestimmen; eine hitzeisolierende Umhüllung, welche mit dem Objekt in der Ofenkammer bewegbar ist, wobei die hitzeisolierende Umhüllung mindestens eines von gasdicht und wasserdicht ist; einen Transmitter, der elektrisch mit dem Thermosensor gekoppelt ist und innerhalb der hitzeisolierenden Umhüllung angeordnet ist, wobei der Transmitter konfiguriert ist, ein drahtloses Signal durch die hitzeisolierende Umhüllung zu übertragen; einen Empfänger, der entfernt von der Ofenkammer angeordnet ist und konfiguriert ist, um das drahtlose Signal vom Transmitter zu empfangen; und eine Steuereinheit, welche mit dem Empfänger gekoppelt ist und steuerbar ist, um Daten, die anzeigend für die Temperatur des Objektes an dem ersten Ort sind, aufzuzeichnen, basierend zumindest teilweise auf dem vom Empfänger erhaltenen drahtlosen Signal. Dabei können der Temperatursensor und/oder Transmitter elektrisch mit einer Batterie oder einer anderen Spannungsversorgung verbunden sein.

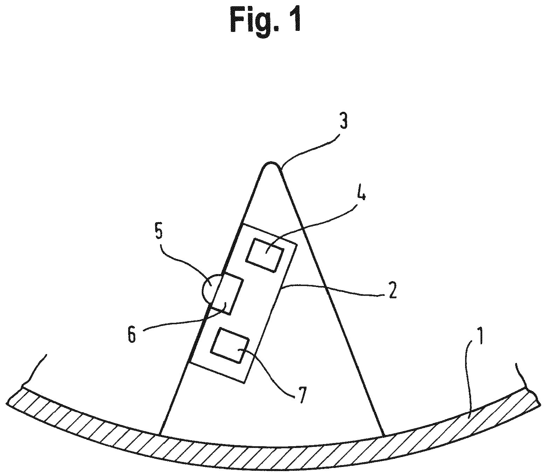

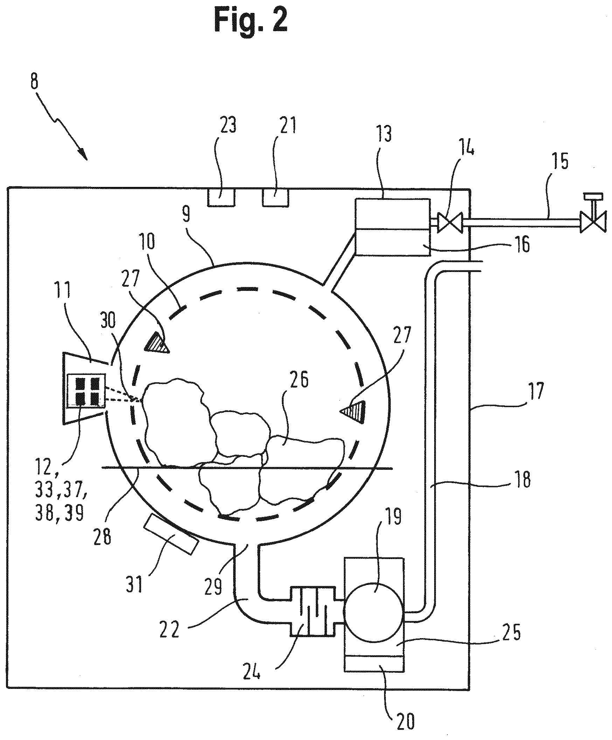

Die Veröffentlichung EP 2 319 971 A1 beschreibt eine Waschmaschine, umfassend eine Trommel, einen Wassertank, in welchem die Trommel installiert ist und welcher mit Wasser gefüllt ist, einen Antriebsmotor für die Trommel, ein Gehäuse, eine Vorrichtung zur Detektion der Trommelrotationsgeschwindigkeit und eine Vorrichtung zur Detektion von Schwingungen, die konfiguriert ist als ein Beschleuniaunassensor, der in der Lage ist, die Vibration des Wassertanks zu bestimmen und mehrere Bereiche für die Bestimmung der Beschleunigung zu schalten, eine Kontrolleinrichtung zur Regelung des Motors und der schwingungsdetektierenden Vorrichtung auf der Basis des Outputs dieser Vorrichtung, wobei diese Vorrichtung die Bereiche für die Detektion der Beschleunigung in Abhängigkeit von der Rotationsgeschwindigkeit der Trommel umschaltet. Die Figuren 1 oder Fig. 2a, illustrieren, dass eine schwinaunasdetektierende Vorrichtung außen am Wassertank, also dem Laugenbehälter, angebracht ist. Als ein solcher Sensor wird insbesondere ein MEMS-Sensor empfohlen.

Die Veröffentlichung DE 10 2012 112 199 A1 beschreibt eine Wäschebehandlungsmaschine, insbesondere Wäschetrockner, mit einer im Gehäuse der Maschine drehbar gelagerten Trommel zur Aufnahme der zu behandelnden Wäsche, mit einem elektrischen Antriebsmotor für den Antrieb der Trommel, mit einer Programmsteuerung für die Auswahl und Steuerung des Programmablaufs der Wäschebehandlungsmaschine und mit einer Steuereinrichtung zur Steuerung der Drehbewegung der Trommel durch den Antriebsmotor. Die Trommel ist insbesondere mit einem Beschleunigungssensor ausgerüstet, der in Verbindung mit der Steuereinrichtung die Drehbewegung der Trommel und/oder eine definierte Position der Trommel und/oder eine Neigung der Trommel in der Standposition sensiert, so dass diese Zustandseigenschaften der Wäschetrommel im Steuerungsprozess der Wäschebehandlungsmaschine berücksichtigt werden können.

Die Veröffentlichung DE 10 2007 014 425 A1 betrifft ein bewegliches Abgabe- und Dosiersystem, insbesondere für Wasch- und Reinigungsmittel. Die Steuereinheit weist in einer besonders bevorzugten Ausführungsform der Erfindung keine Verbindung zur möglicherweise vorhandenen Steuerung des Haushaltsgerätes auf. In einer alternativen Ausgestaltung ist die Steuereinheit allerdings mit der vorhandenen Steuerung des Haushaltsgeräts gekoppelt, vorzugsweise kabellos. Beispielsweise kann ein Sensor an oder in einer Geschirrspülmaschine positioniert werden, der drahtlos ein Signal an die Dosiereinheit überträgt, wenn die Steuerung des Haushaltsgeräts die Dosierung bspw. eines Reinigungsmittels aus der Dosierkammer oder von Klarspüler bewirkt.

Die Veröffentlichung WO 2010/007054 A1 beschreibt ebenfalls ein Dosiersystem mit einem Bauelementträger.

Die Veröffentlichung DE 10 2013 210 126 A1 beschreibt ein Verfahren zum Betrieb eines Trockners mit Beladungserkennung sowie einen hierzu geeigneten Trockner. Es wird ein fluidmechanischer Sensor für die Messung eines Drucks p und/oder einer Geschwindigkeit v der Prozessluft eingesetzt. Ein Sensorknoten, insbesondere ein steuerbarer Sensorknoten, oder eine autarke Energieversorgung usw. werden nicht erwähnt.

Die Veröffentlichung DE 10 2005 055411 A1 beschreibt einen Trockner zum Trocknen mindestens eines Objektes, wobei der Trockner aufweist: ein Trocknergehäuse, in dem ein Trockenraum zur Aufnahme des mindestens einen Objektes vorgesehen ist, insbesondere eine Heizung zum Heizen des Trockenraums, ein infrarotsensitives Messelement zur berührungslosen spektroskopischen Messung der Oberflächentemperatur des in dem Trockenraum vorgesehenen Objektes und Ausgabe eines Oberflächen-Temperatursignals, und eine Steueranordnung mit einer ersten Steuereinrichtung zur Aufnahme des Oberflächen-Temperatursignal von dem infrarotsensitiven Messelement und insbesondere einer zweiten Steuereinrichtung zur Steuerung der Regelung der Heizung, wobei die Steueranordnung aus zumindest dem Oberflächen-Temperatursignal auf einen Feuchtegrad des mindestens einen Objektes schließt.

Vor diesem Hintergrund war es Aufgabe der vorliegenden Erfindung, ein Haushaltsgerät mit verbesserter Steuerung bereitzustellen. Vorzugsweise soll dabei auch ein in Hinblick auf die Sicherheit verbesserter Betrieb des Haushaltsgeräts ermöglicht werden. Außerdem soll ein zum Betrieb dieses Haushaltsgeräts geeignetes Verfahren bereitgestellt werden.

Die Lösung dieser Aufgabe wird nach dieser Erfindung erreicht durch ein Haushaltsgerät, sowie ein zum Betrieb dieses Haushaltsgeräts geeignetes Verfahren mit den Merkmalen der entsprechenden unabhängigen Patentansprüche. Bevorzugte Ausführungsformen des erfindungsgemäßen Haushaltsgeräts sowie des erfindungsgemäßen Verfahrens sind in den jeweiligen abhängigen Patentansprüchen aufgeführt. Bevorzugten Ausführungsformen des erfindungsgemäßen Haushaltsgeräts entsprechen bevorzugte Ausführungsformen des erfindungsgemäßen Verfahrens und umgekehrt, auch wenn dies hierin nicht explizit festgestellt ist.

Gegenstand der Erfindung ist somit ein Haushaltsgerät mit einer Steuereinrichtung und mindestens einem Sensorknoten, umfassend mindestens einen Sensor, eine Auswerteeinheit, eine autarke Energieversorgung und eine Schnittstelle zur drahtlosen Datenkommunikation, wobei die Steuereinrichtung und der Sensorknoten eingerichtet sind, drahtlos miteinander zu kommunizieren, wobei der mindestens eine Sensorknoten mindestens zwei mikromechanische Sensoren enthält, die alle eine gleiche Messtelle sensieren können, so dass die Messsignale einen gemeinsamen örtlichen Bezugspunkt haben, und der mindestens eine Sensorknoten derart eingerichtet ist, dass er sowohl von der Steuereinrichtung gesteuert werden kann, als auch selbständig mindestens ein Messsignal erfassen, auswerten und an die Steuereinrichtung übermitteln kann. Unter mikromechanischem Sensor im Sinne der Erfindung wird ein Sensor verstanden, der als Teil eines Mikrosystems aus einem oder mehreren Sensoren, Aktoren und einer Steuerungselektronik auf einem Substrat bzw. Chip ausgeführt ist. Dabei bewegt sich die Größe der einzelnen Komponenten im Bereich von wenigen Mikrometern. Insbesondere sind in der Erfindung der Sensor und der Sensorknoten gemeinsam auf einem Substrat bzw. Chip ausgeführt. Auch wenn der Sensor oder manche der Sensoren selbst keine mechanisch beweglichen Teile enthalten, so wird der Sensor in diesem Text als mikromechanischer Sensor bezeichnet, da er mikromechanische Strukturen aufweist und mit Prozessen hergestellt wird, welche für mechanische Mikrosysteme verwendet werden.

Im erfindungsgemäßen Haushaltsgerät sind die Steuereinrichtung und der mindestens eine Sensorknoten eingerichtet, Daten drahtlos zu kommunizieren. In einer bevorzugten Ausführungsform des erfindungsgemäßen Haushaltsgeräts erfolgt die drahtlose Kommunikation über eine low power blue tooth Verbindung. Die Verbindung kann dabei auf alle möglichen Arten realisiert werden, beispielsweise über individuelle Funkschnittstellen oder auch über Schnittstellen in der Auswerteeinheit und der Steuereinrichtung.

Im erfindungsgemäßen Haushaltsgerät ist die drahtlose Datenkommunikation zwischen der Steuereinrichtung und dem mindestens einen Sensorknoten in beide Richtungen proaktiv. Es kann also beispielsweise ein durch den Sensorknoten selbständig erfasstes und ausgewertetes Messsignal an die Steuereinrichtung übermittelt werden, die Steuereinrichtung kann andererseits aber auch ein Signal an den Sensorknoten übermitteln, beispielsweise zur Abfrage eines Messsignals. Die Steuereinrichtung ist dabei vorzugsweise derart eingerichtet, anhand eines von dem mindestens einen Sensorknoten übermittelten Signals eine Aktion auszuführen.

"Aktion" bedeutet im Sinne der Erfindung jede Möglichkeit, das erfindungsgemäße Haushaltsgerät zu steuern. Eine Aktion kann also beispielsweise die Durchführung eines Behandlungsprogramms oder auch eines Teilabschnittes eines Behandlungsprogramms sein. Dabei kann ein Behandlungsprogramm im Sinne der Erfindung ein in einem Haushaltsgerät werkseitig implementiertes Behandlungsprogramm sein, eine oder mehrere Zusatzoptionen oder auch ein benutzerdefiniertes Behandlungsprogramm. Der Begriff Behandlungsprogramm ist somit hierin sehr breit auszulegen. Des Weiteren kann es sich bei einer Aktion im Sinne der Erfindung aber auch um das bloße Einschalten oder Ausschalten des Gerätes handeln, das Einschalten oder Ausschalten einer Heizung, das Zuführen oder Abpumpen von Wasser, die Ausgabe einer Anzeige auf einem Bedienelement oder auch ein akustisches Signal oder das Ausgeben von Informationen an einen Benutzer.

Jedenfalls ist jede mögliche Art der Steuerung des erfindungsgemäßen Haushaltsgeräts von dem Begriff "Aktion" umfasst.

Im erfindungsgemäßen Haushaltsgerät ist vorgesehen, dass der mindestens eine Sensorknoten eine autarke Energieversorgung umfasst. Auf diese Weise kann der Sensorknoten auch dann selbständig ein Messsignal erfassen, auswerten und an die Steuereinrichtung übermitteln, wenn das Haushaltsgerät ausgeschaltet ist. Die Art der Energieversorgung ist dabei nicht eingeschränkt. Es kann sich dabei beispielsweise um einen Sensorknoten mit Batterie- oder Akkubetrieb handeln, die Energieversorgung kann aber beispielsweise auch thermoelektrisch erfolgen oder auch induktiv. Hier ist jede aus dem Stand der Technik bekannte Lösung möglich.

Der mindestens eine Sensorknoten in dem erfindungsgemäßen Haushaltsgerät umfasst ebenfalls eine Auswerteeinheit. Die Art und Ausgestaltung der Auswerteeinheit ist nicht eingeschränkt, sie kann ein Teil des mindestens einen mikromechanischen Sensors sein, in diesen implementiert sein. Es kann sich aber auch um eine eigenständige Prozessoreinheit handeln. Die Auswerteeinheit ist dabei jedenfalls derart eingerichtet, Messsignale auszuwerten und an die Steuereinrichtung zu übermitteln.

In einer bevorzugten Ausführungsform des erfindungsgemäßen Haushaltsgeräts sind auch Auswerteroutinen in der Auswerteeinheit hinterlegt und die Auswerteeinheit ist derart eingerichtet, anhand beispielsweise eines Soll/Ist-Vergleichs und/oder anhand von Kalibrationswerten/-kurven selbständig von dem Sensorknoten erfasste Messsignale nicht nur auszuwerten, sondern auch zu bewerten und erst dann an die Steuereinrichtung zu übermitteln, wenn dies der Bewertung nach vorgesehen ist. Also beispielsweise, wenn ein hinterlegter Sollwert durch den Istwert überschritten oder unterschritten wird.

Ist das erfindungsgemäße Haushaltsgerät beispielsweise eine Waschmaschine und der mindestens eine Sensorknoten ist im Bereich der Bodengruppe angeordnet und umfasst als mindestens einen mikromechanischen Sensor einen Temperatursensor, so kann der Sensorknoten selbständig, beispielsweise in vorbestimmten Zeitintervallen, welche in der Auswerteeinheit des Sensorknotens hinterlegt sein können, eine Temperatur in der Waschmaschine erfassen, unabhängig davon, ob diese eingeschaltet ist oder nicht. Bei Unterschreiten eines in der Auswerteeinheit hinterlegten Sollwertes Tₛₒₗₗ, kann dann der mindestens eine Sensorknoten die den Sollwert unterschreitende Ist-Temperatur Tᵢₛₜ an die Steuereinrichtung übermitteln und diese veranlassen, eine Heizung einzuschalten bis die Sollwert-Temperatur wieder erreicht ist. Auf diese Weise kann die Waschmaschine bei Inbetriebnahme durch einen Benutzer dann vor Schäden durch zugefrorene Leitungen geschützt werden, falls diese beispielsweise in einem Kellerraum oder Außengebäude ohne Heizung aufgestellt ist.

Ist das erfindungsgemäße Haushaltsgerät beispielsweise ein Waschtrockner mit einer Trommel zur Aufnahme von Wäschestücken und der mindestens eine Sensorknoten ist in der Trommel in einem Wäschemitnehmer angeordnet und der mindestens eine mikromechanische Sensor ist ein Drucksensor, so kann für den Fall, dass der Drucksensor ein Messsignal durch das Einlegen von Wäschestücken sensiert, der mindestens eine Sensorknoten das ausgewertete Messsignal an die Steuereinrichtung übermitteln und diese veranlassen, den Wäschetrockner einzuschalten.

Ist das erfindungsgemäße Haushaltsgerät ein Waschtrockner und der mindestens eine Sensorknoten ist in einem Wäschemitnehmer in der Trommel angeordnet und der mindestens eine mikromechanische Sensor ist ein Sensor zur Feuchteerkennung, so kann durch die Steuereinrichtung in regelmäßigen Abständen eine Messung der Restfeuchte der Wäschestücke in der Trommel während eines Trocknungsprozesses erfolgen. Durch die Anordnung in dem Wäschemitnehmer kann der mikromechanische Feuchteerkennungssensor dabei besonders nah an die zu sensierenden Wäschestücke herangebracht werden und ein Feuchtegrad somit sehr genau bestimmt werden.

Der mindestens eine Sensorknoten umfasst mindestens zwei mikromechanische Sensoren. Die Art der mindestens zwei mikromechanischen Sensoren ist erfindungsgemäß nicht eingeschränkt. Sie hängt aber im Allgemeinen von der Art der durch den Sensorknoten zu erfassenden Messsignale ab sowie von der Platzierung des Sensorknotens in dem erfindungsgemäßen Haushaltsgerät. Jedenfalls können alle Arten von mikromechanischen Sensoren eingesetzt werden.

In einer bevorzugten Ausführungsform des erfindungsgemäßen Haushaltsgeräts ist ein mikromechanischer Sensor ein optischer Sensor, ausgewählt aus der Gruppe bestehend aus einem Radarsensor und einem spektroskopischen Sensor.

Im Allgemeinen sind insbesondere spektroskopische Sensoren vielseitig einsetzbar. Durch die Auswertung der entsprechenden Spektren und/oder Absorptionsbanden kann beispielsweise eine Restfeuchte von Wäschestücken bestimmt werden, ein Trübungsgrad und/oder eine Zusammensetzung einer Wasch- oder Reinigungsflüssigkeit, eine Materialart, wie etwa bei unterschiedlichen Textilien, eine Farbe oder auch eine Behandlungsmittelmenge oder eine Verschmutzungsart.

Ist ein mikromechanischer Sensor ein spektroskopischer Sensor, dann sind bevorzugt in der Auswerteeinheit und/oder in der Steuereinrichtung ebenfalls Daten zu einem wellenlängenabhängigen Absorptionsverhalten in Bezug auf das jeweilige Messobjekt hinterlegt, also beispielsweise für ein Behandlungsmittel oder auch eine Textilart. Insbesondere ist es auch vorteilhaft, wenn dann in der Auswerteeinheit und/oder der Steuereinrichtung zusätzlich Kalibrationsspektren und/oder Kalibrationskurven hinterlegt sind. Dann kann nämlich auch eine quantitative Auswertung eines Messsignals erfolgen, beispielsweise um eine Behandlungsmittelmenge zu bestimmen.

Der Wellenlängenbereich, in welchem der mikromechanische spektroskopische Sensor sensiert, ist nicht eingeschränkt. Es kann beispielsweise ein Infrarot(IR)-, Ultraviolett(UV)- oder UV-VIS(Ultravioletter und sichtbarer Bereich)-Sensor eingesetzt werden kann. Auch die Ausgestaltung des mikromechanischen spektroskopischen Sensors ist nicht eingeschränkt, es können alle aus dem Stand der Technik bekannten Lösungen verwendet werden.

In einer bevorzugten Ausführungsform des erfindungsgemäßen Haushaltsgeräts ist der optische Sensor ein spektroskopischer Sensor, der im Infrarotbereich sensiert. Besonders bevorzugt ist der Nahinfrarotbereich (NIR).

In einer weiteren bevorzugten Ausführungsform des erfindungsgemäßen Haushaltsgeräts weist der mindestens eine Sensorknoten zusätzlich auch einen Positions- und/oder Abstandserkennungssensor auf.

Ist das erfindungsgemäße Haushaltsgerät beispielsweise eine Waschmaschine oder ein Waschtrockner mit einem Laugenbehälter und einer darin angeordneten Wäschetrommel und der mindestens eine Sensorknoten ist beispielsweise im Laugenbehältermantel angeordnet, so könnte ein Positionserkennungssensor ermöglichen, dass Wäschestücke in der Wäschetrommel durch eines oder mehrere Löcher in einem Perimeter der Trommel mittels des mikromechanischen Infrarot-Sensors sensiert werden, indem eine Stellung der Trommel relativ zu dem Sensorknoten im Laugenbehältermantel detektiert wird. Auf diese Weise kann durch die Korrelation der beiden Sensormesssignale eine sehr präzise Detektion der Wäschestücke, auch bei rotierender Trommel, ermöglicht werden.

In einer weiteren bevorzugten Ausführungsform des erfindungsgemäßen Haushaltsgeräts sind die mindestens zwei mikromechanischen Sensoren ausgewählt aus der Gruppe bestehend aus einem Restfeuchteerkennungssensor, einem Drucksensor, einem Temperatursensor und einem Beschleunigungssensor. Die Ausgestaltung des jeweiligen mikromechanischen Sensors ist dabei nicht eingeschränkt. Es können die aus dem Stand der Technik bekannten mikromechanischen Sensoren verwendet werden.

Die Restfeuchteerkennung kann also beispielsweise durch einen magnetischen, einen kapazitiven, einen resistiven oder einen induktiven mikromechanischen Sensor realisiert werden.

Ein Drucksensor kann beispielsweise ein kapazitiv arbeitender mikromechanischer Sensor sein, ein Sensor nach der Gegendruckmethode, ein piezoresistiv arbeitender Sensor, auch Sensoren basierend auf Änderungen der spezifischen Leitfähigkeit, des Brechungsindex oder der Permeabilität, sowie der Fluoreszenzfähigkeit eines Festkörpers sind möglich.

In einer bevorzugten Ausführungsform des erfindungsgemäßen Haushaltsgeräts ist der mikromechanische Drucksensor jedoch ein Drucksensor mit einer Membran. Hier wird durch die auf die Membran ausgeübte Kraft ein Druckimpuls an das Druckelement in dem mikromechanischen Drucksensor übertragen. Die Kraftübertragung durch die Membran ist insbesondere dann vorteilhaft, wenn der Drucksensor direkt mit den Messobjekten, also beispielsweise Wäschestücken, in Kontakt kommen kann.

Ein solcher Drucksensor kann zudem auch zu einem sichereren Betrieb des erfindungsgemäßen Haushaltsgeräts beitragen, da durch die direkte Kraftübertragung auch beispielsweise die Anwesenheit von Lebewesen in der Trommel einer Waschmaschine oder eines Waschtrockners festgestellt werden kann. Die Steuereinheit kann dann durch die Übermittlung des ausgewerteten Messsignals von dem Sensorknoten veranlasst werden, ein Behandlungsprogramm zu stoppen oder überhaupt nicht zu starten. Auch die Ausgabe einer Warnung an einen Benutzer kann erfolgen, beispielsweise auf einem Display an dem Haushaltsgerät und/oder über ein externes Display, etwa auf einem Smartphone.

Als Beschleunigungssensor kann beispielsweise ein kapazitiv arbeitender Sensor eingesetzt werden. Auch ein Sensor basierend auf einem Widerstandsbelastungsstreifen ist einsetzbar. Es können zudem sowohl einachsige, als auch Sensoren mit zwei oder mehreren Messachsen verwendet werden.

In einer bevorzugten Ausführungsform des erfindungsgemäßen Haushaltsgeräts ist der mikromechanische Beschleunigungssensor ein Sensor mit 3 Messachsen. Auf diese Weise können durch die Auswertung der einzelnen Messachsensignale und deren Frequenzanteile auch Verschleißerscheinungen oder eine Unwucht in einem erfindungsgemäßen Haushaltsgerät mit dynamischen Komponenten, also beispielsweise einer Trommel, detektiert werden.

In einer bevorzugten Ausführungsform des erfindungsgemäßen Haushaltsgeräts besteht der mikromechanische Temperatursensor aus einem n-leitenden Silizium-Kristall, der in Planar-Technologie hergestellt ist.

Die Anzahl an mikromechanischen Sensoren in dem mindestens einen Sensorknoten ist nicht eingeschränkt. Er umfasst mindestens zwei mikromechanische Sensoren, vorzugsweise aber eine Vielzahl an mikromechanischen Sensoren.

Da mikromechanische Sensoren besonders kleinteilige Elemente sind, d.h. wenig Bauraum benötigen, werden erfindungsgemäß zwei oder mehr Sensoren in einen Sensorknoten implementiert. Hierzu kann der Sensorknoten insbesondere modular aufgebaut sein. Die kleinteilige Ausgestaltung mikromechanischer Sensoren bietet überdies aber noch einen entscheidenden weiteren Vorteil. Werden nämlich mehrere mikromechanische Sensoren verwendet, können alle Sensoren die gleiche Messstelle sensieren. Die Messsignale haben somit alle einen gemeinsamen örtlichen Bezugspunkt. Dadurch können die aus den einzelnen Messsignalen erhaltenen Parameter besonders genau miteinander korreliert werden, da örtliche Schwankungen, beispielsweise einer Behandlungsmittelmenge oder einer Feuchtigkeit in einem Textil, vermieden werden können.

In dem erfindungsgemäßen Haushaltsgerät ist zudem jegliche Kombination an mikromechanischen Sensoren möglich, also beispielsweise kann der mindestens eine Sensorknoten einen Drucksensor und/oder, vorzugsweise oder, einen Beschleunigungssensor enthalten. Ein Sensorknoten kann aber auch einen Temperatursensor und einen spektroskopischen Sensor enthalten, wobei zusätzlich auch noch ein Positionserkennungssensor vorhanden sein kann. Ein Sensorknoten kann ebenfalls einen Restfeuchteerkennungssensor, einen Drucksensor und einen Temperatursensor enthalten. Die Kombination und die Anzahl an mikromechanischen Sensoren in einem Sensorknoten wird dabei im Allgemeinen von den gewünschten zu erfassenden Messsignalen abhängen, sowie von der Platzierung des mindestens einen Sensorknotens in dem erfindungsgemäßen Haushaltsgerät.

In einer weiteren bevorzugten Ausführungsform des erfindungsgemäßen Haushaltsgeräts umfasst der mindestens eine Sensorknoten zusätzlich ein mikromechanisches Mikrofon. Über die Audiosignalauswertung ist dann beispielsweise die Bestimmung einer Beladungsart möglich, wie etwa das Erkennen von Schuhen oder Wäschestücken in der Trommel einer Waschmaschine, eines Waschtrockners oder Trockners. Da überdies auch die Anwesenheit von Lebewesen erkannt werden kann, kann auch ein mikromechanisches Mikrofon einen sichereren Betrieb ermöglichen.

In dem erfindungsgemäßen Haushaltsgerät ist auch die Anzahl an Sensorknoten nicht eingeschränkt. In einer bevorzugten Ausführungsform weist das erfindungsgemäße Haushaltsgerät zwei Sensorknoten auf. Besonders bevorzugt ist es aber, wenn das Haushaltsgerät drei oder mehr Sensorknoten aufweist. Diese können vorzugsweise dann an unterschiedlichen Positionen im Haushaltsgerät platziert sein. Ebenso können die Sensorknoten jeweils auch unterschiedliche Anzahlen, Arten und/oder Kombinationen an mikromechanischen Sensoren aufweisen.

Jedenfalls kann der mindestens eine Sensorknoten, umfassend mindestens zwei mikromechanische Sensoren, die Auswerteeinheit, die Schnittstelle zur drahtlosen Datenkommunikation und die autarke Energieversorgung auf besonders geringem Bauraum realisiert werden. Bevorzugt können die Komponenten des Sensorknotens modular in ein Gehäuse mit Deckel integriert werden. In einer bevorzugten Ausführungsform des erfindungsgemäßen Haushaltsgeräts ist der mindestens eine Sensorknoten daher ein modulares Bauteil mit einer Größe im Bereich 2-4 × 2-4 × 0.5-1.5 mm³ ist. Aufgrund des geringen Platzbedarfs kann der mindestens eine Sensorknoten flexibel in dem erfindungsgemäßen Haushaltsgerät positioniert werden. Durch die Verkapselung in Form des Gehäuses mit Deckel ist überdies auch der Einsatz unter widrigen Umgebungsbedingungen, wie etwa in einer Lauge oder bei hoher Temperatur, möglich.

Die Art und Ausgestaltung des erfindungsgemäßen Haushaltsgeräts ist nicht eingeschränkt. In einer bevorzugten Ausführungsform ist das Haushaltsgerät jedoch ein wasserführendes Haushaltsgerät, ausgewählt aus der Gruppe, bestehend aus einer Waschmaschine, einem Waschtrockner, einem Trockner und einem Geschirrspüler.

In einer überdies bevorzugten Ausführungsform ist das wasserführende Haushaltsgerät eine Waschmaschine oder ein Waschtrockner mit einem Laugenbehälter und einer Trommel zur Aufnahme von Wäschestücken, wobei mindestens ein Wäschemitnehmer in der Trommel angeordnet ist und der mindestens eine Sensorknoten in dem mindestens einen Wäschemitnehmer angeordnet ist. Auf diese Weise kann der Sensorknoten besonders nah an Wäschestücke in der Trommel herangebracht werden.

In einer weiteren bevorzugten Ausführungsform des erfindungsgemäßen Haushaltsgeräts ist mindestens ein mikromechanischer Sensor des im Wäschemitnehmer der Waschmaschine oder des Waschtrockners angeordneten Sensorknotens ein Beschleunigungssensor mit mehreren Messachsen.

Dann kann nämlich vorteilhaft sowohl die Beladungsmenge, als auch der Schlupf der Trommel gegenüber einem Antriebsmotor und eine Unwucht der Trommel berechnet werden und gegebenenfalls durch die Steuereinrichtung kompensiert werden. Über das z-Messachsensignal kann dann außerdem die Position und die Geschwindigkeit der Trommel erkannt werden. Durch die Beschleunigungssignale können außerdem auch Alterungseffekte, wie etwa Verschleiß der Trommellager oder Alterung des Antriebsstranges detektiert werden und über die Steuereinrichtung dann gegebenenfalls eine Information an einen Benutzer ausgegeben werden.

In einer weiteren bevorzugten Ausführungsform des erfindungsgemäßen Haushaltsgeräts ist ein mikromechanischer Sensor des im Wäschemitnehmer der Waschmaschine oder des Waschtrockners angeordneten Sensorknotens ein Drucksensor mit einer Membran. Dann kann vorteilhaft ein Druck, den die Wäschestücke beim Kontakt mit dem Wäschemitnehmer auf die Membran ausüben, auf das Druckelement im Drucksensor übertragen werden. Ebenfalls können dann mit einem solchen Sensorknoten auch sicherheitskritische Situationen, wie zum Beispiel ein Kind oder ein Tier in der Trommel, über den Druck auf die Membran erkannt werden und die Steuereinrichtung dann durch die Übermittlung des ausgewerteten Signals veranlasst werden, ein Behandlungsprogramm zu stoppen oder nicht zu starten und/oder eine Warnung auszugeben.

In einer weiteren bevorzugten Ausführungsform des erfindungsgemäßen Haushaltsgeräts ist der ein mikromechanischer Sensor des im Wäschemitnehmer der Waschmaschine oder des Waschtrockners angeordneten Sensorknotens ein spektroskopischer Sensor, der im NIR-Bereich sensiert. Auf diese Weise kann besonders nah an den Wäschestücken sensiert werden und somit eine gute Signalintensität erreicht werden.

Im erfindungsgemäßen Haushaltsgerät weist der im Wäschemitnehmer angeordnete Sensorknoten zwei oder mehr mikromechanische Sensoren auf, um die Messsignale vorteilhaft miteinander korrelieren zu können.

Ist das erfindungsgemäße Haushaltsgerät beispielsweise eine Waschmaschine mit einem Laugenbehälter, einer Trommel und mindestens einem Sensorknoten, der in einem Wäschemitnehmer in der Trommel angeordnet ist und umfasst der Sensorknoten als mikromechanische Sensoren einen Drucksensor mit Membran und einen Infrarot-Sensor, so können beispielsweise durch den Sensorknoten gleichzeitig eine Beladungsmenge, eine Textilart und eine auf den Textilien vorhandene Restmenge an Behandlungsmittel bestimmt werden, wenn Wäschestücke in die Trommel eingelegt werden. Durch die Steuereinrichtung kann dann das Haushaltsgerät eingeschaltet und ein entsprechendes Behandlungsprogramm dann sehr präzise an die in der Trommel befindlichen Wäschestücke angepasst und einem Benutzer vorgeschlagen und/oder automatisch durchgeführt werden.

Des weiteren kann das erfindungsgemäße Haushaltsgerät in bevorzugten Ausführungsformen auch eine Waschmaschine oder ein Waschtrockner mit zwei oder mehr Wäschemitnehmern in der Waschtrommel sein, wobei in mindestens zwei, vorzugsweise aber mehr Wäschemitnehmern jeweils ein Sensorknoten mit mindestens zwei mikromechanischen Sensoren angeordnet sein kann. Dabei können sich die Art und die Ausgestaltung der mikromechanischen Sensoren auch für mindestens zwei Sensorknoten unterscheiden. Ebenso kann aber die Anzahl an mikromechanischen Sensoren für mindestens zwei der in den Wäschemitnehmern platzierten Sensorknoten unterschiedlich sein, sowie die Kombination an mikromechanischen Sensoren.

In einer bevorzugten Ausführungsform des erfindungsgemäßen Haushaltsgeräts ist das Haushaltsgerät eine Waschmaschine oder ein Waschtrockner mit einer Dosiereinheit. Die Dosiereinheit ist eine automatisierte Dosiereinheit, welche mit der Steuereinrichtung verbunden ist und von dieser gesteuert werden kann, um Behandlungsmittel zu dosieren, beispielsweise bei einem durch den mindestens einen Sensorknoten sensiertes Unterschreiten einer optimalen Dosiermenge Cₒₚₜ.

Insbesondere für einen Haushalt mit vernetzten Geräten, weist das erfindungsgemäße Haushaltsgerät zusätzlich eine Schnittstelle zur drahtlosen Datenübertragung auf, wobei das Haushaltsgerät dann mittels einer externen Bedieneinheit, beispielsweise einem Handy und/oder einem Tablet-PC vorzugsweise über eine App bedient werden kann.

Insbesondere bevorzugt ist das erfindungsgemäße Haushaltsgerät dann auch in ein Heimnetzwerk mit mindestens einem weiteren Haushaltsgerät integriert. Vorteilhaft können dann Informationen, beispielsweise zur Steuerung von Betriebsprogrammen, von einem Haushaltsgerät auf ein anderes übertragen werden.

Im Allgemeinen weisen Haushaltsgeräte auch mindestens eine Anzeigeeinheit auf, welche zur Ausgabe von Information in Form von Text, Bild und/oder Zeichen, farbig und/oder schwarz-weiß, statisch und/oder animiert ausgebildet sein können. Vorzugsweise können über die Anzeigeeinrichtung Informationen und/oder Warnungen an einen Benutzer ausgegeben werden. Ganz besonders bevorzugt ist die Anzeigeeinrichtung jedoch eine externe Anzeigeeinrichtung, beispielsweise der Touchscreen eines Smart-Phones oder TabletPCs.

Gegenstand der Erfindung ist außerdem ein Verfahren zum Betrieb eines Haushaltsgeräts mit einer Steuereinrichtung und mindestens einem Sensorknoten, umfassend mindestens einen Sensor, eine Auswerteeinheit, eine autarke Energieversorgung und eine Schnittstelle zur drahtlosen Datenkommunikation, wobei die Steuereinrichtung und der Sensorknoten eingerichtet sind, drahtlos miteinander zu kommunizieren, wobei der mindestens eine Sensorknoten mindestens zwei mikromechanische Sensoren enthält, die alle eine gleiche Messtelle sensieren können, so dass die Messsignale einen gemeinsamen örtlichen Bezugspunkt haben, und der mindestens eine Sensorknoten derart eingerichtet ist, dass er sowohl von der Steuereinrichtung gesteuert werden kann, als auch selbständig mindestens ein Messsignal erfassen, auswerten und an die Steuereinrichtung übermitteln kann, wobei es die folgenden Schritte umfasst:
(b) Sensieren eines Signals durch mindestens einen Sensor des mindestens einen Sensorknotens;
(c) Auswerten des Signals durch die Auswerteeinheit und Übermitteln des ausgewerteten Signals an die Steuereinrichtung;

Das erfindungsgemäße Verfahren sieht vor, dass Schritt (b) sowohl durch die Steuereinrichtung initiiert werden kann, als auch selbständig durch den Sensorknoten erfolgen kann, ohne Initiation durch die Steuereinrichtung. Die Steuereinrichtung kann also beispielsweise ein Signal zur Erfassung eines Messsignals an den mindestens einen Sensorknoten übermitteln und dadurch Schritt (b) des Verfahrens einleiten. Es kann aber beispielsweise auch in der Auswerteeinheit des mindestens einen Sensorknotens eine Routine hinterlegt sein, selbständig eine Messung zu initiieren und dadurch Schritt (b) des erfindungsgemäßen Verfahrens einzuleiten.

In einer bevorzugten Ausführungsform des erfindungsgemäßen Verfahrens ist das Haushaltsgerät eine Waschmaschine oder ein Waschtrockner mit einem Laugenbehälter und einer Trommel zur Aufnahme von Wäschestücken und der mindestens eine Sensorknoten ist in einem unteren Bereich des Laugenbehälters angeordnet und weist einen mikromechanischen Sensor einen Temperatursensor auf. In der Auswerteeinheit des Sensorknotens ist dabei eine Routine hinterlegt, die in regelmäßigen Zeitintervallen, auch bei abgeschaltetem Gerät, eine Temperaturerfassung initiiert. Da der mindestens eine Sensorknoten autark mit Energie versorgt wird, ist dies möglich. In der Auswerteroutine ist weiterhin ein Schwellenwert für eine minimale Temperatur Tₘᵢₙ in der Waschmaschine oder dem Waschtrockner hinterlegt, bei welcher ein Behandlungsprogramm noch durchgeführt werden kann. Sensiert der mikromechanische Temperatursensor in dieser bevorzugten Ausführungsform eine Temperatur unterhalb Tₘᵢₙ, so übermittelt die Auswerteeinheit das ausgewertete Signal an die Steuereinrichtung. Die Steuereinrichtung schaltet dann eine Heizung in der Waschmaschine oder dem Waschtrockner so lange ein, bis Tₘᵢₙ wieder überschritten wird. Hierzu kann die Steuereinrichtung wiederum in regelmäßigen Zeitintervallen eine Temperaturmessung durch den mikromechanischen Temperatursensor des mindestens einen Sensorknotens initiieren.

In einer weiteren bevorzugten Ausführungsform des erfindungsgemäßen Verfahrens ist das Haushaltsgerät eine Waschmaschine oder ein Waschtrockner mit einem Laugenbehälter und einer Trommel zur Aufnahme von Wäschestücken. Die Trommel weist zwei Wäschemitnehmer auf in denen jeweils ein Sensorknoten angeordnet ist. Jeder Sensorknoten weist neben der Auswerteeinheit, der Schnittstelle für drahtlose Datenkommunikation und der autarken Energieversorgung jeweils einen Drucksensor mit einer Membran auf. Legt nun ein Benutzer zu waschende Wäschestücke bei ausgeschaltetem Gerät in die Trommel ein, so üben die Wäschestücke Druck auf die Membran mindestens eines Drucksensors aus. Die Auswerteeinheit wertet das Drucksignal aus und übermittelt es an die Steuereinrichtung, welche daraufhin die Waschmaschine oder den Waschtrockner einschaltet.

In einer bevorzugten Ausführungsform des erfindungsgemäßen Verfahrens ist das Haushaltsgerät eine Waschmaschine oder ein Waschtrockner mit einem Laugenbehälter und einer Trommel zur Aufnahme von Wäschestücken, wobei mindestens ein Wäschemitnehmer in der Trommel angeordnet ist und der mindestens eine Sensorknoten in dem mindestens einen Wäschemitnehmer angeordnet ist und ein Sensor ein Beschleunigungssensor mit mehreren Messachsen ist, wobei es zusätzlich den Schritt umfasst: (a) Rotieren der Trommel bei mindestens einer vorgegebenen Drehzahl Nₛₑₜ,₁.

Dann kann nämlich insbesondere ein Beladungsgrad der Trommel mit Wäschestücken genau gemessen werden. Durch die Drehung der Trommel kollidieren die Wäschestücke mit dem Wäschemitnehmer und erzeugen auf diese Weise einen Beschleunigungsimpuls, welcher durch den Beschleunigungssensor erfasst wird. Aus der Art und der Höhe eines solchen Messsignals kann dann der Beladungsgrad bestimmt werden. Eine Variation über mehrere unterschiedliche Drehzahlen erhöht dabei die Genauigkeit der Messung. Daher ist es besonders bevorzugt, wenn die Trommel in Schritt (a) bei mehreren unterschiedlichen vorgegebenen Drehzahlen N_{set,i} rotiert.

Die Erfindung hat zahlreiche Vorteile. Durch die Verwendung mikromechanischer Sensoren kann ein Sensorknoten besonders flexibel und platzsparend ausgelegt werden. Eine Vielzahl unterschiedlicher Sensortypen können dabei in variabler Anzahl in den Sensorknoten implementiert werden. Insbesondere die Verwendung optischer Sensoren erlaubt dabei auch eine variable Anpassung der Messaufgaben, da insbesondere diese Sensoren sehr vielseitig einsetzbar sind, wie in der Beschreibung dargelegt. Besonders vorteilhaft ist zudem, dass durch die kleinteilige Bauweise mikromechanischer Sensoren alle Messsignale ortsbezogen auf dieselbe Messstelle detektiert werden können. Somit ist eine besonders genaue Korrelation aller Werte möglich. Durch die autarke Energieversorgung ist zudem keine elektrische oder mechanische Kontaktierung zwischen der Steuereinheit und dem Sensorknoten notwendig. Die Verwendung von low power wireless Schnittstellen gewährleistet überdies eine hohe Lebensdauer bei Batteriebetrieb aufgrund des geringen Energieverbrauchs. Durch den geringen Platzbedarf des Sensorknotens kann dieser auch sehr flexibel in einem Haushaltsgerät und damit insbesondere auch sehr nah an der Messstelle positioniert werden, wodurch die Signalintensität und die Signalgenauigkeit nochmal gesteigert werden können. In der Ausführung als kompaktes, verkapseltes Bauteil kann der Sensor insbesondere auch auf beweglichen Teilen des Haushaltsgeräts platziert werden und ist ebenso auch unter widrigen Bedingungen, wie etwa in einer Waschlauge oder bei hoher Temperatur einsetzbar.

Weitere Einzelheiten der Erfindung ergeben sich aus der nachfolgenden Beschreibung nicht einschränkender Ausführungsformen. Hierbei wird Bezug genommen auf die Figuren 1, 2 und 3.

Figur 1 zeigt in einer nicht einschränkenden Ausführungsform einen schematischen Ausschnitt eines als Waschmaschine ausgestalteten erfindungsgemäßen Haushaltsgeräts. Der Ausschnitt zeigt einen Teil einer Trommel 1, auf welchem ein Wäschemitnehmer 3 angeordnet ist. In dem Wäschemitnehmer 3 ist ein Sensorknoten 2 mit autarker Energieversorgung angeordnet. Der Sensorknoten 2 weist dabei einen mikromechanischen Beschleunigungssensor mit mehreren Messachsen 4 und einer integrierten Auswerteeinheit, sowie einen mikromechanischem Drucksensor 6 mit einer Membran 5 und einer integrierten Auswerteeinheit auf. Des Weiteren verfügt der Sensorknoten 2 auch über eine Funkeinheit 7 zur drahtlosen Datenübermittlung an eine Steuereinrichtung, welche hier nicht gezeigt ist. Der Sensorknoten 2 ist hierin als platzsparendes modulares Bauteil ausgeführt mit den Abmessungen 3 × 3 × 0.95 mm³. Durch die räumliche Nähe der beiden mikromechanischen Sensoren 4 und 6 in dem modularen Bauteil, können beide Sensoren die gleiche Messstelle erfassen. Die Messstelle ist hierin die Sensorknoten-seitige Fläche des Wäschemitnehmers 3.

In dieser Ausführungsform können Wäschestücke, welche sich in der Trommel 1 befinden, einen Druckimpuls oder einen Beschleunigungsimpuls durch Kontakt mit dem im Wäschemitnehmer 3 angeordneten Sensorknoten 2 auslösen, beispielsweise dann, wenn sich die Trommel dreht. Die Übertragung des Druckimpulses auf den Drucksensor 4 erfolgt dabei über die Membran 5. Die entsprechenden Messsignale werden dann durch die in den Sensoren 4 und 6 integrierten Auswerteeinheiten ausgewertet und über die Funkschnittstelle an die Steuereinrichtung der Waschmaschine (hier nicht gezeigt) übertragen. Mittels solcher Messsignale kann dann beispielsweise das Einlegen von Wäsche in die Trommel detektiert werden oder auch ein Beladungsgrad bestimmt werden.

Des weiteren bietet in dieser Ausführungsform der Drucksensor 6 die Möglichkeit, auch sicherheitskritische Situationen, wie zum Beispiel ein Kind oder ein Tier in der Trommel 1, zu erkennen.

Der mit mehreren Messachsen ausgestattete Beschleunigungssensor 4 kann überdies auch zur Erkennung einer Position und Geschwindigkeit der Trommel 1 herangezogen werden. Beispielsweise, indem das z-Beschleunigungsachsensignal ausgewertet wird. Aus den Beschleunigungssignalen können zudem auch durch Auswertung der entsprechenden Frequenzanteile Alterungseffekte, wie Verschleiß der Trommellager oder Alterung des Antriebsstranges detektiert werden.

Figur 2 zeigt in einer nicht einschränkenden Ausführungsform ein als Waschmaschine 8 ausgestaltetes erfindungsgemäßes Haushaltsgerät. Die Waschmaschine 8 weist ein Gehäuse 17 auf, in dem ein Laugenbehälter 9 angeordnet ist, in welchem eine Trommel 10 zur Aufnahme von Wäschestücken 26 um eine senkrecht zur Figurenebene stehende Achse drehbar gelagert ist. Das höchste im Laugenbehälter 9 erreichbare Wasserniveau 28 ist durch eine horizontale Linie schematisch dargestellt. In der Trommel 10 sind überdies die Wäschemitnehmer 27 angeordnet.

Bei der hier gezeigten Ausführungsform ist an eine Ablauföffnung 29 in einem Boden des Laugenbehälters 9 eine Laugenbehälterablaufleitung 22 angeschlossen, die über einen Flusenabscheider 24 zu einer Saugseite einer Pumpe 19 hinführt. An eine Druckseite der Pumpe 19 ist eine Abflussleitung 18 angeschlossen. Die Pumpe 19 ist antriebswirksam mit einem drehzahlgeregelten Antriebsmotor 25 verbunden, welcher beispielsweise als permanenterregter, mehrsträngiger Synchronmotor mit MOSFET-Bauelement und einem Leistungserfasser 20 ausgestaltet sein kann. Die Abflussleitung 18 mündet außerhalb des Gehäuses, hier nicht gezeigt, in eine Hausabwasserleitung oder eine Fußbodenentwässerung.

Figur 2 zeigt außerdem eine automatisierte Dosiereinheit 13 für Behandlungsmittel, welche an eine Einspülschale 16 angeschlossen ist. Über die Einspülschale 16 ist dem Laugenbehälter 9 von einer Frischwasserleitung 15 herrührend Wasser zuführbar. Hierzu befindet sich in der Frischwasserleitung 15 ein Sperrventil 14, das von einer Steuereinrichtung 23 entsprechend einem Behandlungsprogrammablauf oder gegebenenfalls entsprechend einem übermittelten Sensorsignal angesteuert wird.

Im Mantel des Laugenbehälters 9 befindet sich eine Aussparung 11, in welcher ein Sensorknoten 12 mit autarker Energieversorgung angeordnet ist. In dieser nicht einschränkenden Ausführungsform ist der Sensorknoten 12 batteriebetrieben. Der Sensorknoten 12 weist zudem eine Auswerteeinheit 33 mit einer Schnittstelle zur drahtlosen Kommunikation über eine low power Bluetooth Verbindung mit der Steuereinrichtung 23 auf. Der Sensorknoten 12 umfasst in dieser nicht einschränkenden Ausführungsform weiterhin einen mikromechanischen Nahinfrarot-Sensor 38, einen Positionserkennungssensor 39 und einen mikromechanischen Temperatursensor 37. Die Komponenten des Sensorknotens 12 sind in ein Gehäuse mit Deckel modular integriert, welches in die Aussparung 11 des Laugenbehälters eingepasst ist.

Die Trommel 10 weist in dieser Ausführungsform einen Lochring 30 auf. Mittels des Positionserkennungssensors 39 kann dabei insbesondere eine Position des Lochrings 30 der Trommel 10 relativ zum Sensorknoten 12 bestimmt werden. Auf diese Weise kann das Sensieren der Wäschestücke 26 in der Trommel 10 durch den Nahinfrarot-Sensor 38 mit der Position des Lochringes 30 synchronisiert werden, derart, dass NIR-Strahlung von dem Nahinfrarot-Sensor 39 des Sensorknotens 12 in die Trommel 10 eingestrahlt und die von den Wäschestücken 26 in der Trommel 10 reflektierte Strahlung durch ein Loch des Lochrings 30 detektiert werden kann.

Mittels des mikromechanischen Temperatursensors 37 kann in dieser nicht einschränkenden Ausführungsform insbesondere eine Temperatur innerhalb des Waschmaschinengehäuses 17 detektiert werden. Da der Sensorknoten 12 über eine autarke Energieversorgung verfügt, kann dies ebenfalls bei ausgeschalteter Waschmaschine 8 erfolgen. In der Auswerteeinheit 33 des Sensorknotens 12 sind hierzu bevorzugt ein Messzeitintervall für die Temperaturerfassung und ein unterer Schwellenwert Tₘᵢₙ hinterlegt. Bei Unterschreiten des Wertes Tₘᵢₙ, wie es beispielsweise im Winter an einem nicht beheizten Aufstellort der Waschmaschine 8 der Fall sein kann, übermittelt die Auswerteeinheit 33 das ausgewertete Temperaturmesssignal an die Steuereinrichtung 23, um diese zu veranlassen, die Heizung 31 einzuschalten bis der Schwellenwert Tₘᵢₙ wieder überschritten ist. Auf diese Weise kann ein Benutzer die Waschmaschine 8 jederzeit starten, ohne Gefahr einer Schädigung durch beispielsweise zugefrorene Leitungen oder ähnliches.

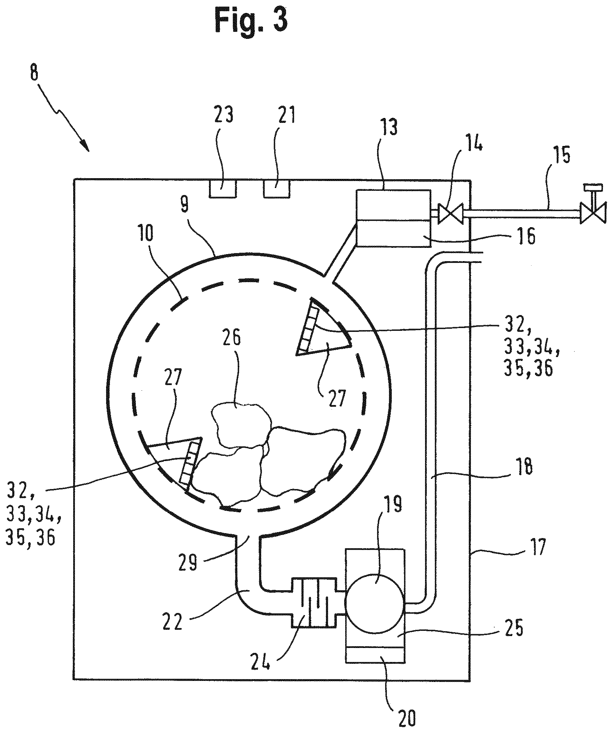

Figur 3 zeigt ebenfalls ein als Waschmaschine 8 ausgestaltetes erfindungsgemäßes Haushaltsgerät. Die Waschmaschine 8 weist ebenfalls ein Gehäuse 17 auf, in dem ein Laugenbehälter 9 angeordnet ist, in welchem eine Trommel 10 zur Aufnahme von Wäschestücken 26 um eine senkrecht zur Figurenebene stehende Achse drehbar gelagert ist.

Bei der hier gezeigten Ausführungsform ist ebenfalls an eine Ablauföffnung 29 in einem Boden des Laugenbehälters 9 eine Laugenbehälterablaufleitung 22 angeschlossen, die über einen Flusenabscheider 24 zu einer Saugseite einer Pumpe 19 hinführt. An eine Druckseite der Pumpe 19 ist eine Abflussleitung 18 angeschlossen. Die Pumpe 19 ist antriebswirksam mit einem drehzahlgeregelten Antriebsmotor 25 verbunden, welcher beispielsweise als permanenterregter, mehrsträngiger Synchronmotor mit MOSFET-Bauelement und einem Leistungserfasser 20 ausgestaltet sein kann. Die Abflussleitung 18 mündet außerhalb des Gehäuses, hier nicht gezeigt, in eine Hausabwasserleitung oder eine Fußbodenentwässerung.

Figur 3 zeigt außerdem ebenfalls eine automatisierte Dosiereinheit 13 für Behandlungsmittel, welche an eine Einspülschale 16 angeschlossen ist. Über die Einspülschale 16 ist dem Laugenbehälter 9 von einer Frischwasserleitung 15 herrührend Wasser zuführbar. Hierzu befindet sich in der Frischwasserleitung 15 ein Sperrventil 14, das von einer Steuereinrichtung 23 entsprechend einem Behandlungsprogrammablauf oder gegebenenfalls entsprechend einem übermittelten Sensorsignal angesteuert wird.

Die Trommel 10 weist hierin zwei Wäschemitnehmer 27 auf, welche zur besseren Übersicht vergrößert dargestellt sind. In den Wäschemitnehmern 27 ist jeweils ein Sensorknoten 32 mit autarker Energieversorgung angeordnet. In dieser nicht einschränkenden Ausführungsform ist die Energieversorgung durch ein hier nicht gezeigtes Piezoelement realisiert. Das Piezoelement ist dazu vorzugsweise an einer exponierten Stelle des jeweiligen Wäschemitnehmers 27 angeordnet und verbiegt sich in Kontakt mit Wäschestücken 26.

Der Sensorknoten 32 umfasst in dieser nicht einschränkenden Ausführungsform einen mikromechanischen Beschleunigungssensor 34 mit mehreren Messachsen, einen Drucksensor mit einer Membran 35, eine Auswerteeinheit mit einer low power Bluetooth Schnittstelle 33 zur drahtlosen Datenkommunikation mit der Steuereinrichtung 23, sowie ein mikromechanisches Mikrofon 36.

Das mikromechanische Mikrofon 36 ermöglicht in dieser nicht einschränkenden Ausführungsform, eine Beladungsart, beispielsweise Schuhe oder Wäschestücke 26, durch entsprechende Signalauswertung zu detektieren. Zusätzlich bietet das mikromechanische Mikrofon auch einen Sicherheitsaspekt, da über das detektierte Audiosignal auch Lebewesen in der Trommel erkannt werden können, oder auch eine Fehlfunktion der Waschmaschine 8 erfasst werden kann.

Über den Beschleunigungssensor 34 und den Drucksensor 35 kann hierin gleichzeitig eine Beladungsmenge über dieselbe Messstelle bestimmt werden. Würde in den Sensorknoten 32 zusätzlich noch ein optischer Sensor implementiert, so könnte über ebenfalls dieselbe Messstelle dann auch beispielsweise noch eine Behandlungsmittelmenge und/oder eine Verschmutzungsart und/oder -menge detektiert werden.

Auf jeden Fall bietet das erfindungsgemäße Haushaltsgerät durch die proaktive Kommunikation von Sensorknoten und Steuereinrichtung und durch die Korrelation der mit dem erfindungsgemäßen Verfahren erhaltenen ortsbezogenen Messsignale die Möglichkeit, ein Behandlungsprogramm individuell und sehr genau an die zu behandelnden Gegenstände anzupassen, sowie das Haushaltsgerät auch sicherer zu betreiben.

### Bezugszeichen

- 1: Trommel
- 2: Sensorknoten mit autarker Energieversorgung
- 3: Wäschemitnehmer
- 4: Mikromechanischer Beschleunigungssensor mit integrierter Auswerteeinheit
- 5: Membran
- 6: Mikromechanischer Drucksensor mit integrierter Auswerteeinheit
- 7: Funkeinheit zur drahtlosen Datenübermittlung, low power Bluetooth
- 8: Wasserführendes Haushaltsgerät, Waschmaschine
- 9: Laugenbehälter
- 10: Trommel
- 11: Laugenbehälteraussparung
- 12: Sensorknoten mit autarker Energieversorgung
- 13: (automatische) Dosiereinheit
- 14: Sperrventil
- 15: Frischwasserleitung
- 16: Einspülschale
- 17: Gehäuse
- 18: Abflussleitung
- 19: Pumpe
- 20: Leistungserfasser
- 21: Anzeige
- 22: Laugenbehälterablaufleitung
- 23: Steuereinrichtung
- 24: Flusenabscheider
- 25: Antriebsmotor
- 26: Wäschestücke
- 27: Wäschemitnehmer
- 28: Wasserstand
- 29: Ablauföffnung im Boden des Laugenbehälters
- 30: Lochring
- 31: Heizung
- 32: Sensorknoten mit autarker Energieversorgung
- 33: Auswerteeinheit mit low power Bluetooth Schnittstelle
- 34: Mikromechanischer Beschleunigungssensor mit mehreren Messachsen
- 35: Mikromechanischer Drucksensor mit Membran
- 36: Mikromechanisches Mikrofon
- 37: Mikromechanischer Temperatursensor
- 38: Mikromechanischer optischer Sensor, Nahinfrarot-Sensor
- 39: Mikromechanischer Positionserkennungssensor

## Patentansprüche

1. Haushaltsgerät (8) mit einer Steuereinrichtung (23) und mindestens einem Sensorknoten (2, 12, 32) umfassend mindestens einen Sensor (4, 6, 34-39), mindestens eine Auswerteeinheit (4, 6, 33), eine autarke Energieversorgung und eine Schnittstelle zur drahtlosen Datenkommunikation (7, 33), wobei die Steuereinrichtung (23) und der Sensorknoten (2, 12, 32) eingerichtet sind, drahtlos miteinander zu kommunizieren, **dadurch gekennzeichnet, dass** der mindestens eine Sensorknoten (2, 12, 32) mindestens zwei mikromechanische Sensoren (4, 6, 34-39) enthält, die alle eine gleiche Messtelle sensieren können, so dass die Messsignale einen gemeinsamen örtlichen Bezugspunkt haben, und der mindestens eine Sensorknoten (2, 12, 32) derart eingerichtet ist, dass er sowohl von der Steuereinrichtung (23) gesteuert werden kann, als auch selbständig mindestens ein Messsignal erfassen, auswerten und an die Steuereinrichtung (23) übermitteln kann.

2. Haushaltsgerät (8) nach Anspruch 1, **dadurch gekennzeichnet, dass** der Sensorknoten als Mikrosystem mit dem Sensor auf einem gemeinsamen Substrat ausgebildet ist.

3. Haushaltsgerät (8) nach Anspruch 1 oder 2, **dadurch gekennzeichnet, dass** ein mikromechanischer Sensor (4, 6, 34-39) ein optischer Sensor (38) ist, ausgewählt aus der Gruppe, bestehend aus einem Radarsensor und einem spektroskopischen Sensor (38).

4. Haushaltsgerät (8) nach Anspruch 3, **dadurch gekennzeichnet, dass** der optische Sensor (38) ein spektroskopischer Sensor (38) ist, der im Infrarotbereich sensiert.

5. Haushaltsgerät (8) nach Anspruch 3 oder 4, **dadurch gekennzeichnet, dass** der Sensorknoten (2, 12, 32) zusätzlich einen Positions- (39) und/oder Abstandserkennungssensor aufweist.

6. Haushaltsgerät (8) nach einem der Ansprüche 1 bis 5, **dadurch gekennzeichnet, dass** die mindestens zwei Sensoren (4, 6, 34-39) ausgewählt sind aus der Gruppe, bestehend aus einem Restfeuchteerkennungssensor, einem Drucksensor (6, 35), einem Temperatursensor (37) und einem Beschleunigungssensor (4, 34).

7. Haushaltsgerät (8) nach einem der Ansprüche 1 bis 6, **dadurch gekennzeichnet, dass** der Sensorknoten (2, 12, 32) zusätzlich ein mikromechanisches Mikrofon (36) umfasst.

8. Haushaltsgerät (8) nach einem der Ansprüche 1 bis 7, **dadurch gekennzeichnet, dass** das Haushaltsgerät (8) ein wasserführendes Haushaltsgerät (8) ist ausgewählt aus der Gruppe bestehend aus einer Waschmaschine (8), einem Waschtrockner, einem Trockner und einem Geschirrspüler.

9. Haushaltsgerät (8) nach Anspruch 8, **dadurch gekennzeichnet, dass** das wasserführende Haushaltsgerät (8) eine Waschmaschine (8) oder ein Waschtrockner ist mit einem Laugenbehälter (9) und einer Trommel (1, 10) zur Aufnahme von Wäschestücken (26), wobei mindestens ein Wäschemitnehmer (3, 27) in der Trommel (1, 10) angeordnet ist und der mindestens eine Sensorknoten (2, 12, 32) in dem mindestens einen Wäschemitnehmer (3, 27) angeordnet ist.

10. Haushaltsgerät (8) nach Anspruch 9, **dadurch gekennzeichnet, dass** der mindestens eine mikromechanische Sensor (4, 6) des im Wäschemitnehmer (3, 27) angeordneten Sensorknotens (2, 12, 32) ein Beschleunigungssensor (4, 34) mit mehreren Messachsen und/oder ein Drucksensor (6, 35) mit einer Membran (5) ist.

11. Haushaltsgerät (8) nach einem der Ansprüche 1 bis 10, **dadurch gekennzeichnet, dass** das Haushaltsgerät (8) zwei Sensorknoten (2, 12, 32) aufweist.

12. Haushaltsgerät (8) nach einem der Ansprüche 1 bis 11, **dadurch gekennzeichnet, dass** der Sensorknoten (2, 12, 32) und die Steuereinrichtung (23) eingerichtet sind, über eine low power Bluetooth Verbindung (7, 33) drahtlos miteinander zu kommunizieren.

13. Verfahren zum Betrieb eines Haushaltsgeräts (8) mit einer Steuereinrichtung (23) und mindestens einem Sensorknoten (2, 12, 32) umfassend mindestens einen Sensor (4, 6, 34-39), mindestens eine Auswerteeinheit (4, 6, 33), eine autarke Energieversorgung und eine Schnittstelle zur drahtlosen Datenkommunikation (7, 33), wobei die Steuereinrichtung (23) und der Sensorknoten (2, 12, 32) eingerichtet sind, drahtlos miteinander zu kommunizieren, der mindestens eine Sensorknoten (2,12,32) mindestens zwei mikromechanische Sensoren (4, 6, 34-39) enthält, die alle eine gleiche Messtelle sensieren können, so dass die Messsignale einen gemeinsamen örtlichen Bezugspunkt haben, und der mindestens eine Sensorknoten (2, 12, 32) derart eingerichtet ist, dass er sowohl von der Steuereinrichtung (23) gesteuert werden kann, als auch selbständig mindestens ein Messsignal erfassen, auswerten und an die Steuereinrichtung (23) übermitteln kann, **dadurch gekennzeichnet, dass** es die folgenden Schritte umfasst:
a) Sensieren eines Signals durch mindestens einen Sensor (4, 6, 34-39) des mindestens einen Sensorknotens (2, 12, 32);
b) Auswerten des Signals durch die Auswerteeinheit (4, 6, 33) und Übermitteln des ausgewerteten Signals an die Steuereinrichtung (23);

14. Verfahren nach Anspruch 13, **dadurch gekennzeichnet, dass** das Haushaltsgerät (8) eine Waschmaschine (8) oder ein Waschtrockner ist mit einem Laugenbehälter (9) und einer Trommel (1, 10) zur Aufnahme von Wäschestücken (26), wobei mindestens ein Wäschemitnehmer (3, 27) in der Trommel (1, 10) angeordnet ist und der mindestens eine Sensorknoten (2, 12, 32) in dem mindestens einen Wäschemitnehmer (3, 27) angeordnet ist und der mindestens eine mikromechanische Sensor (4, 6, 34-39) ein Beschleunigungssensor (4, 34) mit mehreren Messachsen ist, **dadurch gekennzeichnet, dass** es zusätzlich den Schritt umfasst: (a) Rotieren der Trommel (1, 10) bei mindestens einer vorgegebenen Drehzahl Nₛₑₜ,₁.

## Claims

1. Household appliance (8) with a control facility (23) and at least one sensor node (2, 12, 32) comprising at least one sensor (4, 6, 34-39), at least one evaluation unit (4, 6, 33), an autonomous power supply and an interface for wireless data communication (7, 33), wherein the control facility (23) and the sensor node (2, 12, 32) are configured to communicate wirelessly with one another, **characterised in that** the at least one sensor node (2, 12, 32) includes at least two micromechanical sensors (4, 6, 34-39), which can all detect a similar measuring point, so that the measurement signals have a common local reference point, and the at least one sensor node (2, 12, 32) is configured so that it both can be controlled by the control facility (23) and can independently detect and evaluate a measurement signal and transmit said signal to the control facility (23).

2. Household appliance (8) according to claim 1, **characterised in that** the sensor node is embodied as a microsystem with the sensor on a shared substrate.

3. Household appliance (8) according to claim 1 or 2, **characterised in that** a micromechanical sensor (4, 6, 34-39) is an optical sensor (38), selected from the group consisting of one radar sensor and one spectroscopic sensor (38).

4. Household appliance (8) according to claim 3, **characterised in that** the optical sensor (38) is a spectroscopic sensor (38) which detects in the infrared range.

5. Household appliance (8) according to claim 3 or 4, **characterised in that** the sensor node (2, 12, 32) has a position (39) and/or distance recognition sensor in addition.

6. Household appliance (8) according to one of claims 1 to 5, **characterised in that** the at least two sensors (4, 6, 34-39) are selected from the group consisting of a residual moisture recognition sensor, a pressure sensor (6, 35), a temperature sensor (37) and an acceleration sensor (4, 34).

7. Household appliance (8) according to one of claims 1 to 6, **characterised in that** the sensor nodes (2, 12, 32) comprise a micromechanical microphone (36) in addition.

8. Household appliance (8) according to one of claims 1 to 7, **characterised in that** the household appliance (8) is a water-guiding household appliance (8) selected from the group consisting of a washing machine (8), a washer-dryer, a dryer and a dishwasher.

9. Household appliance (8) according to claim 8, **characterised in that** the water-guiding household appliance (8) is a washing machine (8) or a washer-dryer with an outer tub (9) and a drum (1, 10) for receiving laundry items (26), wherein at least one laundry agitator (3, 27) is arranged in the drum (1, 10) and the at least one sensor node (2, 12, 32) is arranged in the at least one laundry agitator (3, 27).

10. Household appliance (8) according to claim 9, **characterised in that** the at least one micromechanical sensor (4, 6) of the sensor node (2, 12, 32) arranged in the laundry agitator (3, 27) is an acceleration sensor (4, 34) with several measurement axes and/or is a pressure sensor (6, 35) with a membrane (5).

11. Household appliance (8) according to one of claims 1 to 10, **characterised in that** the household appliance (8) has two sensor nodes (2, 12, 32).

12. Household appliance (8) according to one of claims 1 to 11, **characterised in that** the sensor node (2, 12, 32) and the control facility (23) are configured to communicate with one another wirelessly via a low-energy Bluetooth connection (7, 33).

13. Method for operating a household appliance (8) with a control facility (23) and at least one sensor node (2, 12, 32) comprising at least one sensor (4, 6, 34-39), at least one evaluation unit (4, 6, 33), an autonomous power supply and an interface for wireless data communication (7, 33), wherein the control facility (23) and the sensor node (2, 12, 32) are configured to communicate wirelessly with one another, the at least one sensor node (2, 12, 32) includes at least two micromechanical sensors (4, 6, 34-39), which can all detect a similar measuring point so that the measurement signals have a common local reference point, and the at least one sensor node (2, 12, 32) is configured such that it can be controlled by the control facility (23) and can independently detect and evaluate at least a measurement signal and transmit it to the control facility (23), **characterised in that** said method comprises the following steps:
a) sensing a signal by way of at least one sensor (4, 6, 34-39) of the at least one sensor node (2, 12, 32);
b) evaluating the signal by way of the evaluation unit (4, 6, 33) and transmitting the evaluated signal to the control facility (23);

14. Method according to claim 13, **characterised in that** the household appliance (8) is a washing machine (8) or a washer-dryer with an outer tub (9) and a drum (1, 10) for receiving laundry items (26), wherein at least one laundry agitator (3, 27) is arranged in the drum (1, 10) and the at least one sensor node (2, 12, 32) is arranged in the at least one laundry agitator (3, 27) and the at least one micromechanical sensor (4, 6, 34-39) is an acceleration sensor (4, 34) with several measurement axes, **characterised in that** said method additionally comprises the step: (a) rotating the drum (1, 10) at at least one predetermined rotational speed N_{set,1}.

## Revendications

1. Appareil électroménager (8) comprenant un dispositif de commande (23) et au moins un noeud capteur (2, 12, 32) comprenant au moins un capteur (4, 6, 34-39), au moins une unité d'analyse (4, 6, 33), une alimentation en énergie autosuffisante et une interface de communication de données sans fil (7, 33), dans lequel le dispositif de commande (23) et le noeud capteur (2, 12, 32) sont conçus pour communiquer l'un avec l'autre sans fil, **caractérisé en ce que** le au moins un noeud capteur (2, 12, 32) comprend au moins deux capteurs micromécaniques (4, 6, 34-39), lesquels peuvent tous détecter un lieu de mesure identique, de sorte que les signaux de mesure ont un point de référence localisé commun et le au moins un noeud capteur (2, 12, 32) est prévu autant pour être commandé par le dispositif de commande (23) que pour pouvoir, de manière autonome, détecter au moins un signal de mesure, l'analyser et le transmettre ensuite au dispositif de commande (23).

2. Appareil électroménager (8) selon la revendication 1, **caractérisé en ce que** le noeud capteur est réalisé en tant que microsystème comprenant le capteur sur un substrat commun.

3. Appareil électroménager (8) selon la revendication 1 ou 2, **caractérisé en ce qu'**un capteur micromécanique (4, 6, 34-39) est un capteur optique (38) sélectionné parmi le groupe composé d'un capteur radar et d'un capteur spectroscopique (38).

4. Appareil électroménager (8) selon la revendication 3, **caractérisé en ce que** le capteur optique (38) est un capteur spectroscopique (38) détectant le domaine infrarouge.

5. Appareil électroménager (8) selon la revendication 3 ou 4, **caractérisé en ce que** le noeud capteur (2, 12, 32) comprend en outre un capteur de reconnaissance de la position (39) et/ou de distance.

6. Appareil électroménager (8) selon l'une des revendications 1 à 5, **caractérisé en ce que** les au moins deux capteurs (4, 6, 34-39) sont sélectionnés parmi le groupe composé d'un capteur de reconnaissance d'humidité résiduelle, d'un capteur de pression (6, 35), d'un capteur de température (37) et d'un capteur d'accélération (4, 34).

7. Appareil électroménager (8) selon l'une des revendications 1 à 6, **caractérisé en ce que** le noeud capteur (2, 12, 32) comprend en outre un microphone micromécanique (36).

8. Appareil électroménager (8) selon l'une des revendications 1 à 7, **caractérisé en ce que** l'appareil électroménager (8) est un appareil électroménager (8) à circulation d'eau sélectionné parmi le groupe composé d'une machine à laver (8), d'un lave-linge séchant, d'un sèche-linge et d'un lave-vaisselle.

9. Appareil électroménager (8) selon la revendication 8, **caractérisé en ce que** l'appareil électroménager (8) à circulation d'eau est une machine à laver (8) ou un lave-linge séchant comprenant un compartiment à lessive (9) et un tambour (1, 10) destiné au logement de pièces de linge (26), dans lequel au moins un entraîneur de linge (3, 27) est disposé dans le tambour (1, 10) et le au moins un noeud capteur (2, 12, 32) est disposé dans le au moins un entraîneur de linge (3, 27).

10. Appareil électroménager (8) selon la revendication 9, **caractérisé en ce que** le au moins un capteur micromécanique (4, 6) du noeud capteur (2, 12, 32) se trouvant dans l'entraîneur de linge (3, 27) est un capteur d'accélération (4, 34) présentant plusieurs axes de mesure et/ou un capteur de pression (6, 35) à membrane (5).

11. Appareil électroménager (8) selon l'une des revendications 1 à 10, **caractérisé en ce que** l'appareil électroménager (8) comprend deux noeuds capteurs (2, 12, 32).

12. Appareil électroménager (8) selon l'une des revendications 1 à 11, **caractérisé en ce que** le noeud capteur (2, 12, 32) et le dispositif de commande (23) sont conçus pour communiquer l'un avec l'autre sans fil via une connexion basse puissance Bluetooth (7, 33).

13. Procédé de fonctionnement d'un appareil électroménager (8) comprenant un dispositif de commande (23) et au moins un noeud capteur (2, 12, 32) comportant au moins un capteur (4, 6, 34-39), au moins une unité d'analyse (4, 6, 33), une alimentation en énergie autosuffisante et une interface de communication de données sans fil (7, 33), dans lequel le dispositif de commande (23) et le noeud capteur (2, 12, 32) sont conçus pour communiquer l'un avec l'autre sans fil, le au moins un noeud capteur (2, 12, 32) compte au moins deux capteurs micromécaniques (4, 6, 34-39) qui, tous, peuvent détecter un lieu de mesure identique, de sorte que les signaux de mesure ont un point de référence localisé commun et le au moins un noeud capteur (2, 12, 32) est prévu autant pour être commandé par le dispositif de commande (23) que pour pouvoir, de manière autonome, détecter au moins un signal de mesure, l'analyser et le transmettre ensuite au dispositif de commande (23), **caractérisé en ce qu'**il comprend les étapes suivantes :
a) détection d'un signal par au moins un capteur (4, 6, 34-39) du au moins un noeud capteur (2, 12, 32) ;
b) analyse du signal par l'unité d'analyse (4, 6, 33) et transmission du signal analysé au dispositif de commande (23).

14. Procédé selon la revendication 13, **caractérisé en ce que** l'appareil électroménager (8) est une machine à laver (8) ou un lave-linge séchant comprenant un compartiment à lessive (9) et un tambour (1, 10) destiné au logement de pièces de linge (26), dans lequel au moins un entraîneur de linge (3, 27) est disposé dans le tambour (1, 10) et le au moins un noeud capteur (2, 12, 32) est disposé dans le au moins un entraîneur de linge (3, 27) et le au moins un capteur micromécanique (4, 6, 34-39) est un capteur d'accélération (4, 34) présentant plusieurs axes de mesure, **caractérisé en ce qu'**il comprend en outre l'étape suivante : (a) rotation du tambour (1, 10) à au moins un régime N_{set,1} prédéfini.
